Europäisches Patentamt

European Patent Office

Office européen des brevets

(11) Publication number: **0 107 922**
**A1**

## (12) EUROPEAN PATENT APPLICATION

(21) Application number: **83305882.9**

(22) Date of filing: **29.09.83**

(51) Int. Cl.³: **G 06 K 11/06**

(30) Priority: **30.09.82 US 430253**
**30.09.82 US 429785**

(43) Date of publication of application:
**09.05.84 Bulletin 84/19**

(84) Designated Contracting States:
**DE FR GB IT SE**

(71) Applicant: **NEW YORK INSTITUTE OF TECHNOLOGY**
**Wheatley Road**
**Old Westbury, New York 11568(US)**

(72) Inventor: **Glenn, William E.**
**650 Royal Plaza**
**Ft. Lauderdale Florida 33301(US)**

(72) Inventor: **Marcinka, John W.**
**2879 N. E. 35 Court**
**Lighthouse Point Florida 33064(US)**

(74) Representative: **Skone James, Robert Edmund et al,**
**GILL JENNINGS & EVERY 53-64 Chancery Lane**
**London WC2A 1HN(GB)**

(54) **Graphical data apparatus.**

(57) The disclosure is directed to an apparatus for determining postion in a data space. A generally flat tablet (20) is provided, the tablet being formed of a solid acoustically-conductive material. A movable element (30), such as a stylus, is adapted to be manually movable over the tablet surface, the movable element having a tapered tip (31) which contacts the surface of the tablet (20). An acoustic transducer (33) is coupled to the tip of the movable element (30). Fixed transducer means (20, 21) are coupled to the tablet (20). Means (50) are provided for energizing acoustic energy to propagate in either direction between the transducer (33) of the movable element (30) and the fixed transducer means (21, 22). The midrange frequency of the energy is selected such that the wavelength of the energy mode propagating parallel to the tablet surface is a function of the tablet thickness. Means (91, 92) are provided for determining the time of propagation of the acoustic energy travelling, in either direction, between the transducer (33) of the movable element (30) and the fixed transducer means (20, 21). Each time of propagation is indicative of a coordinate position of the movable element.

./...

Fig. 1

NEW YORK INSTITUTE OF
TECHNOLOGY          - 1 -          52/2149/02

GRAPHICAL DATA APPARATUS

This invention relates to position determination apparatus and, more particularly, to an apparatus for locating the position of a movable element in a data space. In some forms the apparatus can also determine writing pressure, which can be used to convey information such as the desired width of hand-drawn lines.

Graphical data systems are in widespread use for determining the position of a movable element in a data space. These systems have many uses, the most common of which is for entering coordinate information into a computer or other processor. For example, digitizer systems are utilised to enter hand-drawn lines into a computer, to denote the positions of coordinates on a map that overlies a data area, to recognise hand-drawn characters, or to denote selected check-box areas on a worksheet. There are many other uses and potential uses as well, such as in conjunction with video games.

An early form of graphical digitiser employed a writing pen or pointer mechanically coupled to a set of arms for translating the movement of the pen into a sequence of useable information signals. More recently, graphical digitizers have been developed which are, based on the principle of determining the
propagation time of energy between a movable
element and fixed coordinate references, Various
types of energy and transmission media have been
employed. In one system a stylus generates periodic
soundwaves, travelling through the air to spaced
microphones. Since the speed of sound in air is
essentially a known quantity, the coordinates of
the stylus are readily determinable. Other types
of systems use transmission through magnetostrictive
wires or employ a resistive matrix.

In another type of system, a solid platen or
tablet of sound-conductive material, typically of
rectangular shape, is employed. A stylus includes
a source of acoustic energy and a tip which couples
the soundwave energy into the solid platen. Sound
sensing transducers are disposed along two adjacent
edges of the platen, and are coupled to circuitry
which can be used to obtain the x and y coordinates
of the stylus by determining the travel time of the
sound energy in the platen between the stylus and
the sensors. This type of digitizer has certain
disadvantages and advantages. Among the advantages
is that the acoustic energy travels with relatively
high efficiency through the solid sheet, and interfering
objects or noise in the environment will not likely
cause a problem. Also, the surface of a video
display can be used as the tablet. However, there is
a substantial problem in efficiently coupling the
acoustic energy into the tablet and also in efficiently
and inexpensively sensing the acoustic energy at the
edges of the tablet. Difficulties have been encountered
in launching the sound energy into the solid platen

- 3 -

such that it radiates symmetrically and with high efficiency, regardless of the angle of the stylus.

It is among the objects of the present invention to provide improvements in the type of digitizer that employs a solid sheet for transmission of acoustic energy.

In one aspect of the present invention apparatus for position determination in a data space comprises a generally flat tablet formed of a solid acoustically conductive material; a movable element adapted to be manually movable over the tablet surface, the element having a tapered tip which contacts the surface of the tablet, and an acoustic transducer coupled to the tip; fixed acoustic transducer means coupled to the tablet; means for energizing acoustic energy to propagate in either direction between the transducer of the movable element and the fixed transducer means, the midrange frequency of the energy being selected such that the wavelength of the energy mode propagating parallel to the tablet surface is a function of the tablet thickness; and means for determining the time of propagation of the acoustic energy travelling, in either direction, between the transducer of the movable element and the fixed transducer means.

In a first type of operation, the energy mode propagating parallel to the tablet surface is compressional mode energy, and the frequency is selected such that the wavelength of the compressional mode energy is about (where "about" is intended herein to mean plus or minus fifty percent) four times the thickness of the tablet. In this first type of operation, the energy coupled into the tablet thickness is shear mode energy (at a wavelength of about

- 4 -

twice the tablet thickness), which causes the compressional mode wave to be launched parallel to the tablet surface.

In a second type of operation, the energy mode propagating parallel to the tablet surface is shear mode energy, and the frequency is selected such that the wavelenth of the shear mode energy is about the same as the thickness of the tablet. In this second type of operation, the energy coupled into the tablet thickness is compression mode energy, which causes the shear mode wave to be launched parallel to the tablet surface.

By employing the operating frequencies hereof, we have found that the acoustic energy can more efficiently be launched or received from the tablet and there is less dependance on having a consistent angle of the tip of the movable element.

In accordance with a second aspect of the present invention, apparatus for obtaining position and writing pressure information in a data space comprises a generally flat tablet formed on a solid acoustically conductive material; a movable element adapted to be manually movable over the tablet surface, the element including a piezoelectric transducer coupled to a tapered tip which contacts the surface of the tablet; fixed acoustic transducer means coupled to the tablet; means for energizing acoustic energy to propagate in either direction between the transducer of the element and the fixed transducer means; means for determining the time of propagation of the acoustic energy travelling, in either direction, between the transducer of the element and the fixed transducer means; and means for determining the amplitude of the

- 5 -

acoustic energy which has propogated through the tablet, pressure of the element tip on the tablet being determined as a function of the determined amplitude.

An example of apparatus in accordance with the present invention will now be described with reference to the accompanying drawings, in which:-

Figure 1 is a partially schematic block diagram; and,

Figure 2 is a cross-section of the stylus shown in Figure 1.

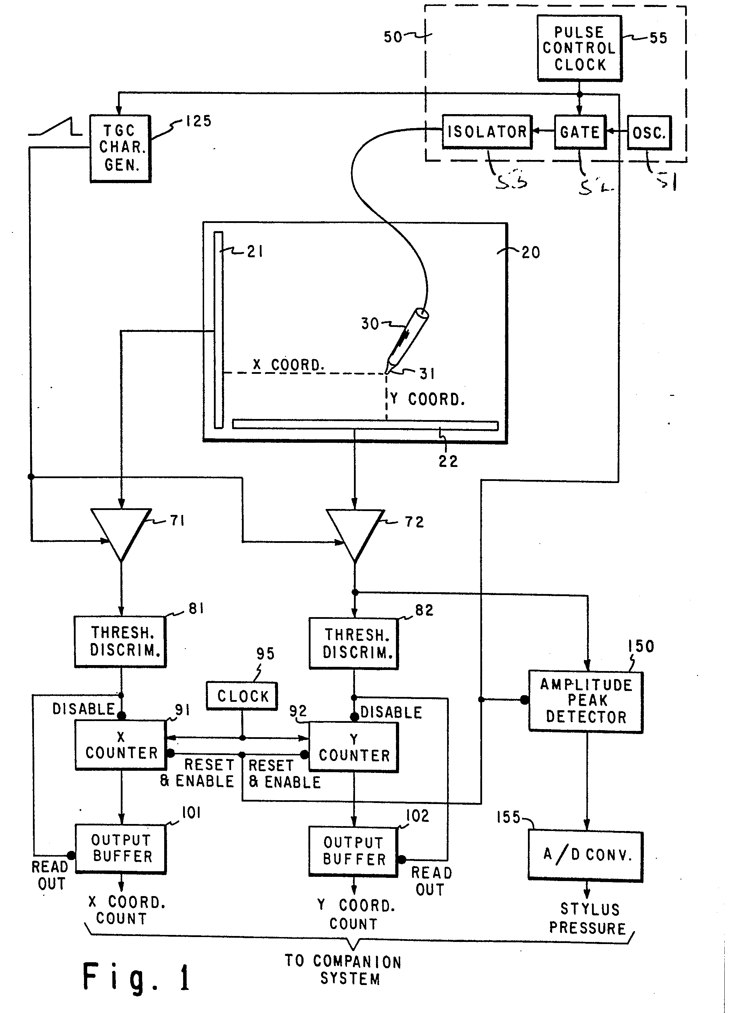

Referring to Figure 1, there is shown an embodiment of a graphical digitizer apparatus in accordance with the invention. A data surface comprises a generally rectangular sheet or tablet 20 of solid acoustic-conductive material. - In the present preferred embodiment, a plastic such as polystyrene is used to advantage. However, other solid materials, such as glass, can be used. Disposed along the edges of the top surface of the tablet 20 are a pair of elongate transducers, an x-sensing transducer 21, and a y-sensing transducer 22. In the present embodiment, the transducers are preferably formed of a piezoelectric plastic material, such as by strips of polyvinyladine fluoride. These inexpensive transducers are secured to the surface with a plastics adhesive.

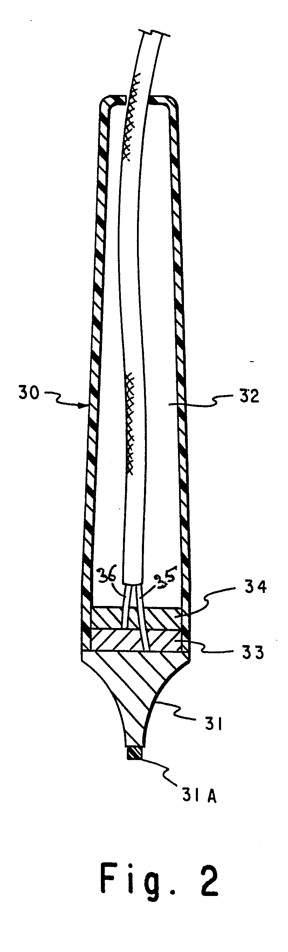

A movable element 30, which is illustrated as being a stylus in the present embodiment, is movable over the tablet 20 and has a tip 31 which contacts the tablet and can be used to draw or designate lines or points on the data surface. The stylus, shown in further detail in Figure 2, includes an elongate plastics pen-like body 32 having a wafer 33 of piezoelectric material, such as lead metaniobate, mounted near the bottom thereof and beneath an acoustic absorber 34. A horn-shaped tip 31 is secured to the bottom of the transducer 33, such as with a plastics adhesive. The material of the horn-shaped tip 31 preferably has an acoustic impedance that is between the acoustic impedance of the transducer 33 and the acoustic impedance of the plastic tablet 20. In the present embodiment an aluminum tip is used. A contact 31A, formed of a resilient material such as Teflon, can be employed to facilitate sliding of the tip on the tablet surface.

Energizing wires 35, 36, coupled to the transducer 33, pass through the stylus body 32. These wires are coupled to energizing means shown in a dashed enclosure 50. The output of a high frequency oscillator 51 is coupled, via a gate 52 and an isolator 53, to the stylus transducer 33. The gate 52, which may be a solid state switch, receives periodic pulses from a pulse control clock 55. Accordingly, the transducer 33 is periodically energized at the pulse control clock rate.

The x and y sensing transducers 21 and 22 are coupled to amplifiers 71 and 72, respectively. The outputs of amplifiers 71 and 72 are respectively coupled to threshold discriminator circuits 81 and 82 which, as known in the art, are operative to consistently detect the first arrival of the acoustic signal at the transducers.

The pulse control clock signal which is operative to enable the gate 52 is also applied to the reset and enable terminals of an x counter 91 and a y counter 92. Clock pulses from a basic clock 95 are counted by the counters 91 and 92 upon being enabled. The outputs of threshold discriminators 81 and 82 are respectively coupled to the disable terminals of the x counter 91 and the y counter 92. The outputs of these counters are respectively coupled to output buffers 101 and 102 which are enabled to read out the counter values by the same signal which disables the counters. The buffer outputs are typically coupled to a computer or other companion system (not shown).

In operation, each time the pulse control clock 55 allows the gate 52 to pass an energizing signal to the transducer 33, the x counter 91 and the y counter 92 are enabled to start counting clock pulses from the clock 95. Upon respective arrival of the acoustic energy at the x and y sensing transducers 21 and 22, the counters 91 and 92 are respectively disabled and their counts are caused to be read out via output buffers 101 and 102 to a companion system which utilizes the digitized x, y coordinates.

In the embodiment hereof, time-gain compensation is employed to compensate for the attenuation of the acoustic signal as it propagates through the tablet 20. As the stylus 30 moves further from a particular sensing transducer (21 or 22), the signal received would normally be weaker, as a function of distance from the sensing transducer. Accordingly, in order to have more consistent signal amplitudes in the x and y processing channels, a time-gain compensation signal is applied to control the gain of amplifiers 71 and 72. The time-gain compensation characteristic may be determined empirically, but it is illustrated as being a simple ramp signal in the Figure 1 embodiment. A time-gain compensation characteristic generator 125 generates the ramp signal, the ramp signal being triggered by the output of the pulse control clock 55. Accordingly, the gain applied to the amplifiers 71 and 72 increases as a function of time from when the energy is first injected into the tablet 20. The time-gain compensation is also useful in the amplitude-sensing feature of the invention to be described below.

The present apparatus is preferably operated at ultrasound frequencies such as between about 200 KHz and 800 KHz. In one functioning embodiment hereof, the thickness of the polystyrene tablet 20 was about 1 mm, and the mid-frequency of operation was about 600 KHz. This resulted in an approximately mid-wavelength in the tablet thickness direction of about 2 mm in shear mode. This energy is converted to compression mode propagation parallel to the tablet surface, with a compression mode wavelength of about 4 mm.

In accordance with a further feature of the invention, the application of the acoustic energy through the horn-shaped tip 31 has pressure-sensitive characteristics that can be utilised to convey information in addition to the coordinate position of the stylus 30. The amount of pressure on the writing tip 31 can be used to express various types of information. For example, when using the digitizer in a computer graphics system for entering line drawings into a computer, the pressure on the pen or stylus 30 can be used to denote the width or thickness of the line to be entered in memory. In the embodiment of Figure 1, the output of amplifier 72 is coupled to an amplitude peak detector 150 which is reset for each transmission by the signal from pulse control clock 55. Time-gain compensation, as described above, is applied to amplifier 72. The output of the amplitude peak detector 150 can be converted to digital form, if necessary, by an analog-to-digital converter 155, and then coupled to the companion system. If desired, the amplitude of the signal received at the other transducer can also be measured and used.

While a stylus 30 is shown, the movable element may take other forms. The embodiment hereof has been described in terms of a system wherein the stylus 30, cursor, or other movable element is used as a transmitter. However, it will be understood that the principles of the invention also apply when the transmission is effected from one or more fixed transducers 21, 22, and reception is by the movable element 30. When operating in this fashion, the previously described features, such as with regard to the relationship between the tablet thickness and the frequency of operation, and also with regard to the tip structure of the movable element, yield advantages as were set forth. It can be noted, in this regard, that to prevent ambiguities when operating in "reverse mode", the x-detection and y-detection can be alternately implemented by having separate transmissions in sequence from an x transducer and a y transducer. Further, operation can be implemented with shear mode energy propagation parallel to the tablet surface by exciting compressional mode energy in the tablet thickness. Operation with the slower travelling and shorter wavelength shear mode has potential for obtaining higher resolution, but the compressional mode is presently

- 10 -

considered to provide higher efficiency and signal-to-noise ratio. Also, each fixed transducer may comprise pairs of strips on the top and bottom of the tablet 20, or single strips on the tablet edge, preferably having a width of about the tablet thickness. Finally, it will be recognized that other types of fixed transducers, such as point transducers, could be employed in conjunction with computing means to determine coordinate position.

CLAIMS

1.    Apparatus for position determination in a data space, the apparatus comprising a generally flat tablet (20) formed of a solid acoustically-conductive material; a movable element (30) adapted to be manually movable over the tablet surface, the element having a tapered tip (31) which contacts the surface of the tablet, and an acoustic transducer (33) coupled to the tip (31); fixed acoustic transducer means (21,22) coupled to the tablet (20); means for energizing acoustic energy to propagate in either direction between the transducer (33) of the movable element (30) and the fixed transducer means (21,22), the midrange frequency of the energy being selected such that the wave length of the energy mode propagating parallel to the tablet surface is a function of the tablet thickness; and means for determining the time of propagation of the acoustic energy travelling, in either direction, between the transducer (33) of the movable element (30) and the fixed transducer means (20,21).

2.    Apparatus for obtaining position and writing pressure information in a data space, the apparatus comprising a generally flat tablet (20) formed of a solid acoustically-conductive material; a movable element (30) adapted to be manually movable over the tablet surface, the element including a piezoelectric transducer (33) coupled to a tapered tip (31) which contacts the surface of the tablet; fixed acoustic transducer means (21,22) coupled to the tablet (20); means for energising acoustic energy to propagate in either direction between the transducer (33) of the element (30) and the fixed transducer means (21,22); means for determining the time of propagation of the acoustic energy travelling, in either direction, between the transducer (33) of the element (20) and the fixed transducer means (21,22); and means for determining the amplitude of the acoustic energy which has propagated through the tablet. (20), the pressure of the element tip (31) on the tablet (20) being determined as a function of the determined amplitude.

3.    Apparatus according to claim 1 or claim 2, further comprising means (125,71,72) for adjusting the amplitude of the acoustic energy as a function of the time of travel of the acoustic wave energy in the tablet (20).

4.    Apparatus according to any of the preceding claims, wherein the energy mode propagating parallel to the tablet surface is compressional mode energy, and the frequency is selected such that the wavelength of the compressional mode energy is about four times the thickness of the tablet (20).

5.    Apparatus according to any of claims 1 to 3, wherein the energy mode propagating parallel to the tablet surface is shear mode energy, and the frequency is selected such that the wavelength of the shear mode energy is about the same as the thickness of the tablet (20).

6.    Apparatus according to any of the preceding claims, wherein the tablet (20) is formed of plastic.

- 13 -

7.    Apparatus according to any of the preceding claims, wherein the fixed transducer means (20,21) are formed of a piezoelectric plastic.

8.    Apparatus according to claim 7, wherein the fixed transducer means (20,21) comprise strips of piezoelectric plastic disposed on adjacent edges of the tablet (20).

9.    Apparatus according to any of the preceding claims, wherein the movable element (30) is a stylus, and the tip (31) of the stylus is horn-shaped.

10.    Apparatus according to any of the preceding claims, wherein the transducer (33) in the movable element (30) comprises a disc of piezoelectric material, and wherein the tip (31) is formed of a material whose acoustic impedance is between the acoustic impedance of the disc of piezoelectric material and the acoustic impedance of the tablet material.

11.    Apparatus according to any of the preceding claims, wherein the tip (31) of the movable element (30) includes a resilient contact (31A) which can slide along the surface of the tablet (20).

12.    Apparatus according to any of the preceding claims, wherein the acoustic energy is ultrasound energy.

Fig. 1

30

32

36 35

34

33

31

31 A

Fig. 2

European Patent
Office

**EUROPEAN SEARCH REPORT**

Application number

EP  83 30 5882

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | IBM TECHNICAL DISCLOSURE BULLETIN, vol. 12, no. 3, August 1969, New York, US J.B. GUNN et al.: "Acoustical data input panel" * Page 390, lines 1-9; figures * | 1,12 | G 06 K  11/06 |
| | --- | | |
| Y | INSTITUTION OF ELECTRICAL ENGINEERS, CONFERENCE ON DISPLAYS, 7th-10th September 1971, London, IEE conference publication no. 80, pages 155-159 R. VEITH: Input device for hand-written graphical data" * Figures 1,2; page 156 * | 1,12 | |
| | --- | | |
| A | US-A-3 808 364 (RICHARD VEITH)  * Abstract; figure 1; column 1, line 7 - column 2, line 49 * | 1,2,6-9,11,12 | TECHNICAL FIELDS SEARCHED (Int. Cl. 3) G 06 K |
| | --- | | |
| A | US-A-3 846 580 (ALFRED E. BRENNER) * Figures 6,7; column 7, line 26 - column 8, line 42 * | 1,2 | |
| | ----- | | |

The present search report has been drawn up for all claims

| Place of search THE HAGUE | Date of completion of the search 06-01-1984 | Examiner BECKER K.H. |
|---|---|---|